# EUROPÄISCHE PATENTSCHRIFT

(11) **EP 3 055 977 B1**
(45) Veröffentlichungstag und Bekanntmachung des Hinweises auf die Patenterteilung: **07.04.2021**
(21) Anmeldenummer: 14784033.4
(22) Anmeldetag: 09.10.2014
(51) Int. Cl.: G06F 13/40, H04L 12/40, H04L 29/08, H04L 12/66, H04L 12/413, G06F 13/42

(54) **TEILNEHMERSTATION IN EINEM BUSSYSTEM UND VERFAHREN ZUM BETREIBEN EINER TEILNEHMERSTATION**
SUBSCRIBER STATION IN A BUS SYSTEM AND METHOD FOR OPERATING A SUBSCRIBER STATION
POSTE DE RÉSEAU DANS UN SYSTÈME DE BUS ET PROCÉDÉ D'EXPLOITATION D'UN POSTE DE RÉSEAU

(30) Priorität: 09.10.2013 DE 102013220377
(43) Veröffentlichungstag der Anmeldung: 17.08.2016
(73) Patentinhaber: Robert Bosch GmbH, 70442 Stuttgart (DE)
(72) Erfinder: NICKEL, Patrick, 63633 Birstein (DE)
(86) Internationale Anmeldenummer: PCT/EP2014/071699
(87) Internationale Veröffentlichungsnummer: WO 2015/052299

(56) Entgegenhaltungen:
- EP-A2- 1 198 103
- DE-A1-102012 224 031
- Robert Bosch Gmbh: "CAN with Flexible Data-Rate Specification Version 1.0", , 17. April 2012 (2012-04-17), XP055047460, Gerlingen, Germany Gefunden im Internet: URL:http://can-newsletter.org/assets/files /ttmedia/raw/e5740b7b5781b8960f55efcc2b93e df8.pdf [gefunden am 2012-12-11] in der Anmeldung erwähnt

## Beschreibung

### Technisches Gebiet

Die vorliegende Erfindung betrifft eine Teilnehmerstation für ein Bussystem und ein Verfahren zum Betreiben einer CAN-Teilnehmerstation und einer CAN-FD-Teilnehmerstation in einem Bussystem.

### Stand der Technik

Automobile Bussysteme entwickeln sich kontinuierlich zu höheren Bandbreiten, niedrigeren Latenzzeiten und strengerer Echtzeitfähigkeit. Zur Vernetzung von Komponenten, wie beispielsweise Steuergerät, Aktor, Sensor, Gateway, usw., mittels Bussystem ist der CAN-Bus in Fahrzeuganwendungen sehr verbreitet und aufgrund seiner parallelen Topologie für viele Anwendungen sehr gut geeignet. Aufgrund des stetig steigenden Datenaufkommens wird durch die Einführung von CAN-FD die Migration existierender Steuergeräte und Fahrzeug-Plattformen zu höheren Datenraten ermöglicht.

Beim CAN-Bussystem werden Nachrichten mit dem CAN-Protokoll übertragen, wie es in der CAN-Spezifikation in der ISO11898 beschrieben ist. In der letzten Zeit wurden hierfür zudem Techniken vorgeschlagen, wie beispielsweise CAN-FD, bei welchen Nachrichten entsprechend der Spezifikation "CAN with Flexible Data-Rate, Specification Version 1.0" (Quelle http://www.semiconductors.bosch.de) Überträgen werden, usw. Bei solchen Techniken wird die maximal mögliche Datenrate durch Einsatz einer höheren Taktung im Bereich der Datenfelder über einen Wert von 1 MBit/s hinaus gesteigert.

Im CAN-Bussystem verwenden bisherige CAN-basierte Netzwerkkomponenten, wie beispielsweise ein Steuergerät, ein Aktor, ein Sensor, ein Gateway, zum Großteil die in Mikrocontrollern integrierten CAN-Controller für die Kommunikation. Hierdurch wird ein sehr kostengünstiger Aufbau der Komponenten hinsichtlich des Kommunikationspfads mit CAN-Transceiver und Common-Mode Choke (CMC) ermöglicht. Alternativ existieren integrierte CAN-Controller, welche sich über beispielsweise ein SPI-Interface an einen Mikrocontroller anbinden lassen. EP 1 198 103 A2 zeigt ein Gateway zur Adaption unterschiedlicher Bussysteme.

Nachteilig ist, dass es bisher notwendig ist, einen Bus einheitlich mit gleichartigen Teilnehmerstationen, beispielsweise nur CAN-Teilnehmerstationen oder nur CAN-FD-Teilnehmerstationen auszulegen. Der Grund dafür besteht darin, dass durch die fehlende Kompatibilität bestehender CAN-Teilnehmerstationen zu CAN-FD-Teilnehmerstationen sonst Fehler im Netzwerk auftreten. Diese Fehler resultieren daraus, dass herkömmliche CAN-Teilnehmerstationen zwar die Arbitrierungsphase von CAN-FD tolerieren, allerdings aufgrund der fehlenden Interpretationsfähigkeit für das hochratige mittlere Datensegment dieses als fehlerhaft beurteilen. Die existierenden CAN-Teilnehmerstationen kommen z.B. zur Bewertung, dass das Bit-Stuffing nicht der notwendigen Form entspricht. Als Resultat könnte eine CAN-Teilnehmerstation dann einen Fehler in Form eines Fehler-Rahmens (Error-Frames) auf den Bus geben, so dass hierdurch die laufende Kommunikation gestört werden würde. DE 10 2012 224 031 A1 lehrt für ein solches gemischtes Netzwerk, dass die CAN FD-Teilnehmer zwischen zwei verschiedenen Kommunikationsprotokollen je nach Bedarf hin und her schalten bzw. einen Protokollausnahmezustand einnehmen.

Problematisch ist zudem, dass es gegebenenfalls gewünscht wird, bestehende Komponenten eines Bussystems zu verwenden. Dies ist derzeit nicht einfach möglich. Stattdessen müssen meist alle CAN-Controller ausgetauscht werden. Im Falle eines im Mikrocontroller integrierten CAN-Controllers führt dies zu einem notwendigen Austausch des Mikrocontrollers. Bei einem eigenständigen CAN-Controller (Stand-Alone CAN-Controller) ist der gesamte eigenständige CAN-Controller auszutauschen.

### Offenbarung der Erfindung

Daher ist es Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, bei welchen in einem CAN-Bussystem bei Bedarf kostengünstig auch CAN-FD-Komponenten betreibbar sind und umgekehrt.

Die Aufgabe wird durch eine Teilnehmerstation für ein Bussystem mit den Merkmalen des Anspruchs 1 gelöst.

Die Teilnehmerstation stellt kostengünstig die Möglichkeit zur Verfügung, dass bei Nutzung von CAN-FD-Teilnehmerstationen im Netzwerk oder Bussystem alle CAN-Teilnehmerstationen eine CAN-FD Toleranz aufweisen. Somit wird es mit der Teilnehmerstation möglich, CAN-Komponenten und CAN-FD-Komponenten in einem Bussystem zu verwenden, ohne dass aufgrund eines solchen Mischbetriebs Fehler auftreten. Beispielsweise führt ein Versenden eines CAN-FD-Rahmens nicht mehr zu einer Unterbrechung der Datenübertragung durch einen Fehler-Rahmen.

Die zuvor genannte Aufgabe wird zudem durch ein Verfahren zum Betreiben einer CAN-Teilnehmerstation nach Anspruch 8 gelöst.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein elektrisches Schaltbild einer Sende-/Empfangseinrichtung des Bussystems mit einer Anpasseinrichtung gemäß dem ersten Ausführungsbeispiel;
Fig. 3 eine CAN-FD-Rahmenstruktur, die von der Anpasseinrichtung gemäß dem ersten Ausführungsbeispiel herangezogen wird;
Fig. 4 ein Flussdiagramm eines Verfahrens gemäß dem ersten Ausführungsbeispiel;
Fig. 5 ein elektrisches Schaltbild einer Sende-/Empfangseinrichtung eines Bussystems mit einer Anpasseinrichtung gemäß einem zweiten Ausführungsbeispiel;
Fig. 6 ein Flussdiagramm eines Verfahrens gemäß dem zweiten Ausführungsbeispiel; und
Fig. 7 ein elektrisches Schaltbild einer Sende-/Empfangseinrichtung eines Bussystems mit einer Anpasseinrichtung gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

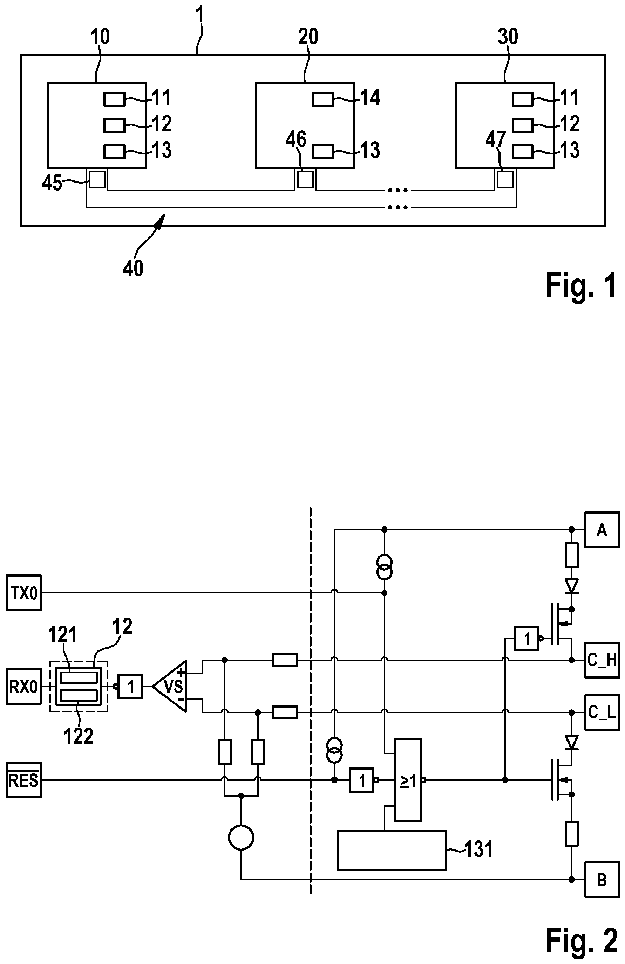

Fig. 1 zeigt ein Bussystem 1, in welchem Nachrichten oder Signale mit dem CAN-Protokoll und Nachrichten oder Signale gemäß der CAN-FD-Spezifikation übertragen werden können. Es können jedoch bei Bedarf auch nur Nachrichten oder Signale mit dem CAN-Protokoll oder nur Nachrichten oder Signale gemäß der CAN-FD-Spezifikation übertragen werden. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an eine Busleitung 40 angeschlossen sind. Über die Busleitung 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11, eine Anpasseinrichtung 12 und eine Sende-/Empfangseinrichtung 13. Die Teilnehmerstation 20 hat dagegen eine Kommunikationssteuereinrichtung 14 und eine Sende-/Empfangseinrichtung 13. Die Sende-/Empfangseinrichtungen 13 der Teilnehmerstationen 10, 20, 30 sind jeweils direkt an die Busleitung 40 angeschlossen, auch wenn dies in Fig. 1 nicht dargestellt ist.

Die Kommunikationssteuereinrichtungen 11, 14 dienen zur Steuerung einer Kommunikation der jeweiligen Teilnehmerstation 10, 20, 30 über die Busleitung 40 mit einer anderen Teilnehmerstation der an die Busleitung 40 angeschlossenen Teilnehmerstationen 10, 20, 30. Die Kommunikationssteuereinrichtungen 11 erzeugen und verarbeiten Nachrichten gemäß dem CAN-Protokoll, wie beispielsweise die Nachrichten 45, 47. Die Kommunikationssteuereinrichtungen 11 können wie ein herkömmlicher CAN-Controller ausgeführt sein. Demzufolge können die Teilnehmerstationen 10, 30 auch als CAN-Teilnehmerstation 10, 30 bezeichnet werden. Die Kommunikationssteuereinrichtung 14 erzeugt und verarbeitet Nachrichten gemäß der CAN-FD-Spezifikation, wie beispielsweise die Nachricht 46. Die Kommunikationssteuereinrichtung 11 kann wie ein herkömmlicher CAN-FD-Controller ausgeführt sein. Demzufolge kann die Teilnehmerstation 20 auch als CAN-FD-Teilnehmerstation 20 bezeichnet werden.

Die Anpasseinrichtung 12 unternimmt Anpassaktionen für den Fall, dass eine Nachricht 46 gemäß der CAN-FD-Spezifikation übertragen wird, wie später noch ausführlicher beschrieben. Die Sende-/Empfangseinrichtung 13 kann wie ein herkömmlicher CAN-Transceiver ausgeführt sein.

Fig. 2 zeigt die Anordnung der Anpasseinrichtung 12 zwischen der Kommunikationssteuereinrichtung 11 und der Sende-/Empfangseinrichtung 13 genauer. Hierbei ist die Kommunikationssteuereinrichtung 11 auf der linken Seite der Anpasseinrichtung 12 in Fig. 2 an den Anschlüssen TX0, RX0 und dem invertierten Anschluss RES angeordnet. Die Sende-/Empfangseinrichtung 13 als herkömmlicher CAN-Transceiver ist auf der rechten Seite der Anpasseinrichtung 12 in Fig. 2 angeordnet. Die Anpasseinrichtung 12 ist bei dem vorliegenden Ausführungsbeispiel im Empfangspfad zwischen der Kommunikationssteuereinrichtung 11 und der Sende-/Empfangseinrichtung 13 angeordnet, also am Anschluss RX0.

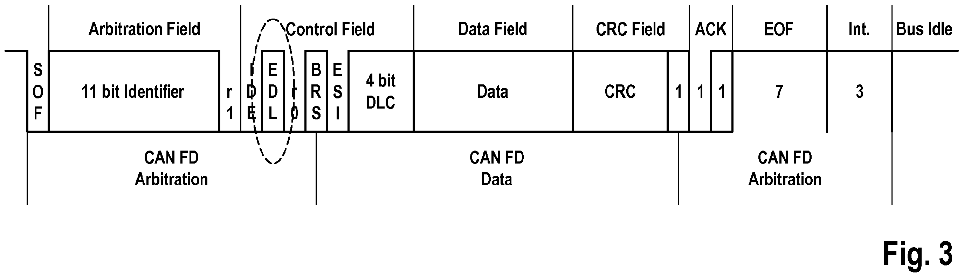

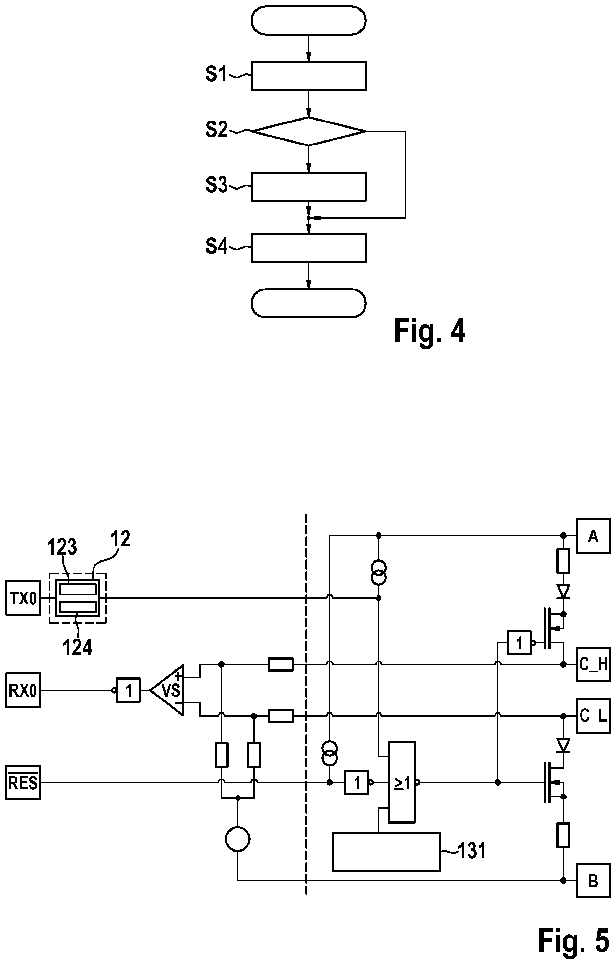

Wie in Fig. 2 schematisch dargestellt, hat die Anpasseinrichtung 12 eine Empfangspfad-Auswerteeinheit 121 und eine Empfangspfad-Ausgabeeinheit 122. Die Empfangspfad-Auswerteeinheit 121 dient zur Auswertung von von der Sende-/Empfangseinrichtung 13 empfangenen Bussignalen als Nachrichten 45, 46, 47. Die Empfangspfad-Auswerteeinheit 121 wertet die Signale bzw. Nachrichten 45, 46, 47 in Bezug darauf aus, ob die empfangene Nachricht eine Nachricht gemäß der CAN-FD-Spezifikation ist oder nicht. Hierbei verwendet die Empfangspfad-Auswerteeinheit 121 die Struktur eines CAN-FD-Rahmens, wie sie in Fig. 3 gezeigt ist. Die Funktionen der Empfangspfad-Auswerteeinheit 121 und der Empfangspfad-Ausgabeeinheit 122 sind in Bezug auf Fig. 4 näher beschrieben. Die Sende-/Empfangseinrichtung 13 umfasst zudem eine Übertemperaturabschalteinheit 131.

Gemäß Fig. 3 folgt in einem CAN-FD-Rahmen nach dem Arbitrierungsfeld ein Kontrollfeld. Das Kontrollfeld umfasst unter anderem ein EDL-Bit (EDL = Extended Data Length = erweiterte Datenlänge), ein BRS-Bit (BRS = Bit Rate Switch = Bittaktung) und ein DLC-Feld (DLC = Data Length Code = Anzahl Byte im Datenfeld) umfasst. Zudem ist in dem CAN-FD-Rahmen ein Terminierungssegment aus ACK und EOF umfasst.

Fig. 4 veranschaulicht das bei dem vorliegenden Ausführungsbeispiel ausgeführte Verfahren zum Betreiben einer CAN-Teilnehmerstation 10, 30 und einer CAN-FD-Teilnehmerstation 20 in dem Bussystem 1. Bei dem Verfahren empfängt die Anpasseinrichtung 12 nach dem Beginn des Verfahrens bei einem Schritt S1 eine der Nachrichten 45, 46, 47 von der Sende-/Empfangseinrichtung 13. Danach geht der Fluss zu einem Schritt S2 weiter.

Bei dem Schritt S2 wertet die Empfangspfad-Auswerteeinheit 121 die bei dem Schritt S1 empfangene Nachricht der Nachrichten 45, 46, 47 aus. Bei dem vorliegenden Ausführungsbeispiel wertet die Empfangspfad-Auswerteeinheit 121 aus, ob das EDL-Bit rezessiv oder dominant ist. Im Falle eines EDL-Bits, das einen CAN-FD-Rahmen kennzeichnet, insbesondere eines rezessiven EDL-Bits, geht der Fluss zu einem Schritt S3 weiter. Im Falle eines anderen EDL-Bits, insbesondere eines dominanten EDL-Bits, liegt kein CAN-FD-Rahmen sondern eine normale CAN-Nachricht vor, so dass der Fluss zu einem Schritt S4 weitergeht.

Bei dem Schritt S3 erzeugt die Empfangspfad-Ausgabeeinheit 122 einen Dummy-Rahmen oder Dummy-Burst. Der Dummy-Rahmen repräsentiert im Wesentlichen eine korrekte CAN-Struktur, mit u. a. Bit-Stuffing, im herkömmlichen Format. Danach geht der Fluss zu einem Schritt S4 weiter.

Bei dem Schritt S4 gibt die Empfangspfad-Ausgabeeinheit 122 den Dummy-Rahmen oder die unveränderte CAN-Nachricht in Empfangsrichtung aus, also an die Kommunikationssteuereinrichtung 11 über den Anschluss RX0. Danach ist das Verfahren beendet.

Demzufolge gibt die Anpasseinrichtung 12 normale CAN-Nachrichten ohne Modifikation an die Kommunikationssteuereinrichtung 11 aus und modifiziert CAN-FD-Nachrichten entsprechend passend für eine CAN-Teilnehmerstation 10, 30.

Gemäß einer Modifikation des ersten Ausführungsbeispiels wertet die Empfangspfad-Auswerteeinheit 121 bei dem Schritt S2 zusätzlich zu dem EDL-Bit auch das BRS-Bit aus. Somit wird neben der Angabe über eine erweiterte Datenlänge der Nachricht oder nicht auch eine Angabe in Bezug auf eine erhöhte Bitrate oder nicht ausgewertet. Ergeben sowohl das EDL-Bit als auch das BRS-Bit, dass ein CAN-FD-Rahmen vorliegt, also im Falle insbesondere eines rezessiven EDL-Bits und insbesondere eines rezessiven BRS-Bits, geht der Fluss zu einem Schritt S3 weiter. Andernfalls geht der Fluss zu dem Schritt S4 weiter. Alternativ oder zusätzlich zum BRS-Bit kann bei dem Schritt S2 auch ein oder mehrere andere Merkmale des CAN-FD-Rahmens ausgewertet werden, um sicher darauf schließen zu können, dass es sich bei der Nachricht um einen CAN-FD-Rahmen handelt.

Gemäß einer weiteren Modifikation des ersten Ausführungsbeispiels kann die Empfangspfad-Auswerteeinheit 121 bei dem Schritt S2 zusätzlich zur CAN-FD-Erkennung und gegebenenfalls modifizierten Weitergabe im Empfangspfad die Länge einer Nachricht der Nachrichten 45, 46, 47 erfassen. Dies kann entweder über eine Decodierung des DLC-Felds (DLC = Data Length Code = Anzahl Bytes im Datenfeld) erfolgen oder durch Detektion der Busaktivität und des Terminierungssegmentes (ACK, EOF) im CAN-FD-Rahmen. Bei der Weitergabe zur Kommunikationssteuereinrichtung 11 am RX0-Anschluss wird der Dummy-Rahmen-Inhalt über die entsprechende Länge ausgelegt und am Ende der CAN-Rahmen in einem gültigen Zustand terminiert. Dies schließt die Prüfsumme (CRC) ACK und EOF ein.

Es sei erwähnt, dass es bei dem ersten Ausführungsbeispiel und seinen Modifikationen ausgeschlossen ist, dass durch die Anpassung der Anpasseinrichtung 12 falsche Nachrichten, insbesondere über Dummy-Rahmen-Inhalte, im CAN-Knoten ankommen, da im Arbitrierungsteil bereits eine eindeutige Adressierung aller Nachrichten erfolgt. Eine CAN-FD Nachricht wird immer mit einer CAN-Adresse versehen, welche frei ist und keine Kollisionen auslöst. Eine Nachricht, welche eine bisher nicht genutzte Adresse verwendet, wird auch bei einem beliebigen Inhalt nicht interpretiert und verwertet.

Fig. 5 zeigt die Anordnung einer Anpasseinrichtung 12 gemäß einem zweiten Ausführungsbeispiel, bei welchem die Anpasseinrichtung 12 wieder zwischen der Kommunikationssteuereinrichtung 11 und der Sende-/Empfangseinrichtung 13 angeordnet ist, wie bei dem ersten Ausführungsbeispiel. Jedoch ist die Anpasseinrichtung 12 gemäß dem vorliegenden Ausführungsbeispiel im Sendepfad zwischen der Kommunikationssteuereinrichtung 11 am Anschluss TX0 und der Sende-/Empfangseinrichtung 13 angeordnet. Die Sende-/Empfangseinrichtung 13 ist wieder ein herkömmlicher CAN-Transceiver und ist auf der rechten Seite der Anpasseinrichtung 12 in Fig. 5 angeordnet.

Bei dem vorliegenden Ausführungsbeispiel umfasst die Anpasseinrichtung 12 eine Sendepfad-Auswerteeinrichtung 123 und eine Sendepfad-Ausgabeeinrichtung 124. Die Sendepfad-Auswerteeinrichtung 123 dient zur Auswertung einer von der Kommunikationssteuereinrichtung 11 an die Sende-/Empfangseinrichtung 13 gesendeten Nachricht der Nachrichten 45, 46, 47. Die Sendepfad-Auswerteeinheit 123 wertet die Nachricht in Bezug darauf aus, ob die gesendete Nachricht ein Fehler-Rahmen ist oder nicht.

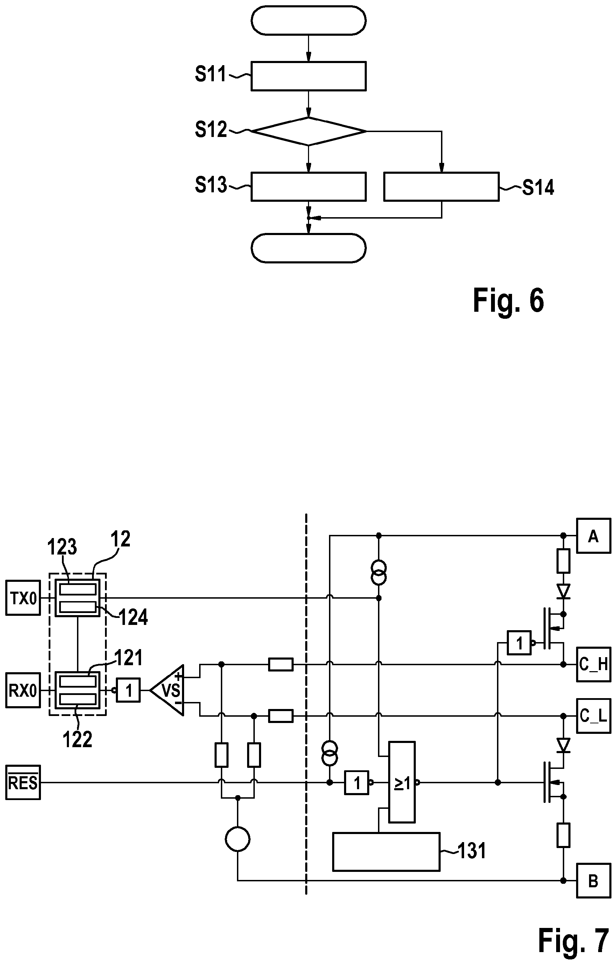

Fig. 6 veranschaulicht das bei dem vorliegenden Ausführungsbeispiel ausgeführte Verfahren zum Betreiben einer CAN-Teilnehmerstation 10, 30 und einer CAN-FD-Teilnehmerstation 20 in dem Bussystem 1. Bei dem Verfahren empfängt die Anpasseinrichtung 12 nach dem Beginn des Verfahrens bei einem Schritt S11 eine Nachricht der Nachrichten 45, 46, 47 von der Kommunikationssteuereinrichtung 11 über den Anschluss TX0. Danach geht der Fluss zu einem Schritt S12 weiter.

Bei dem Schritt S12 wertet die Sendepfad-Auswerteeinheit 123 die bei dem Schritt S11 von der Kommunikationssteuereinrichtung 11 empfangene Nachricht aus, wie zuvor beschrieben. Liegt ein Fehler-Rahmen vor, geht der Fluss zu einem Schritt S13 weiter. Andernfalls geht der Fluss zu einem Schritt S14 weiter.

Bei dem Schritt S13 blockiert die Sendepfad-Ausgabeeinheit 124 den Fehler-Rahmen. Danach ist das Verfahren beendet.

Bei dem Schritt S14 gibt die Sendepfad-Ausgabeeinheit 124 die von der Kommunikationssteuereinrichtung 11 gesendete Nachricht der Nachrichten 45, 46, 47 in Senderichtung aus, also an die Sende-/Empfangseinrichtung 13. Danach ist das Verfahren beendet.

Ansonsten ist das vorliegende Ausführungsbeispiel aufgebaut, wie bei dem ersten Ausführungsbeispiel beschrieben.

Wie in Fig. 7 gezeigt, umfasst die Anpasseinrichtung 12 gemäß einem dritten Ausführungsbeispiel sowohl die Empfangspfad-Auswerteeinheit 121 und die Empfangspfad-Ausgabeeinheit 122 gemäß dem ersten Ausführungsbeispiel und/oder seiner Modifikation als auch die Sendepfad-Auswerteeinrichtung 123 und die Sendepfad-Ausgabeeinrichtung 124 gemäß dem zweiten Ausführungsbeispiel.

Somit werden bei dem vorliegenden Ausführungsbeispiel sowohl das Verfahren gemäß Fig. 4 als auch das Verfahren gemäß Fig. 6 ausgeführt.

Zusammengefasst wird gemäß den zuvor beschriebenen Ausführungsbeispielen beispielsweise ein neuer Transceivertyp eingesetzt, welcher im Vergleich zu bestehenden Transceivern neben den üblichen Bustreibern auf Sendeseite und Schmitt-Trigger auf Empfangsseite eine zusätzliche Logik, die Anpasseinrichtung 12, beinhaltet. Diese Logik ist im Vergleich zu einem vollständigen CAN-Controller stark vereinfacht, sie kann jedoch im Empfangsfall z. B. die Arbitrierungsphase auswerten und bei Erkennung von CAN-FD-Rahmen einen Dummy-Rahmen an die Kommunikationssteuereinrichtung 11 weitergeben. Als Erweiterung oder als Alternative kann im Sendefall der Fehler-Rahmen geblockt werden. Hierdurch wird der CAN-Transceiver als Brücke zwischen gemischtem Netzwerk und herkömmlichen CAN-basierten Steuergeräten, z. B. mit integrierten herkömmlichen CAN-Controllern im Chip, genutzt. Durch Austausch oder andere Bestückung lediglich dieser Komponente (CAN-Transceiver) eines Steuergeräts kann ein Anwender bestehende Komponenten in einem schellen CAN-FD Netzwerk einsetzen und umgekehrt auch CAN-FD-basierte Komponenten in ein CAN-basiertes Netzwerk einbringen.

Alle zuvor beschriebenen Ausgestaltungen des Bussystems 1, der Teilnehmerstationen 10, 20,30 und des Verfahrens gemäß dem ersten bis dritten Ausführungsbeispiel können einzeln oder in allen möglichen Kombinationen Verwendung finden. Zusätzlich sind insbesondere folgende Modifikationen denkbar.

Das zuvor beschriebene Bussystem 1 gemäß dem ersten bis dritten Ausführungsbeispiel ist anhand eines auf dem CAN-Protokoll basierenden Bussystems beschrieben. Das Bussystem 1, 2 gemäß dem ersten bis dritten Ausführungsbeispiel kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf die Busleitung 40 oder einen gemeinsamen Kanal der Busleitung 40 gewährleistet ist.

Das Bussystem 1, 2 gemäß dem ersten bis dritten Ausführungsbeispiel ist ein Netzwerk, in welchem insbesondere ein CAN-Netzwerk oder ein CAN FD-Netzwerk oder ein LIN-Netzwerk oder ein FlexRay-Netzwerk parallel betrieben werden können.

Die Anzahl und Anordnung der Teilnehmerstationen 10, 20, 30 in dem Bussystemen 1 gemäß dem ersten bis dritten Ausführungsbeispiel ist beliebig. Insbesondere können auch nur Teilnehmerstationen 10 oder Teilnehmerstationen 30 in dem Bussystem 1 des ersten bis dritten Ausführungsbeispiels vorhanden sein.

Die Auswertung der Bussignale bzw. Nachrichten 45, 46, 47 kann an verschiedenen Stellen im Sende-/Empfangspfad der Teilnehmerstationen 10, 30 erfolgen. Darüber hinaus können verschiedene Eigenschaften eines CAN-Signals zur Detektion eines CAN-FD-Rahmens genutzt werden, um eine günstige Implementierung zur erreichen. Neben der Auswertung der CAN-FD-Kennungsbits (EDL, BRS) kann auch eine Auswertung auf Basis der Adressbereiche erfolgen.

Zur Erweiterung der Funktionalität der Anpasseinrichtung 12 ist eine Ergänzung von konfigurierbaren/programmierbaren Adressbereichsfiltern denkbar.

Zur Unterstützung von Stromsparfunktionalität im Sinne von "vorgegebenem Netzwerken" ("Pretended Networking") und "teilweisem Netzwerken" ("Partial Networking") können die zuvor genannten Funktionen der Anpasseinrichtung 12 in den zu modifizierenden Baustein der Anpasseinrichtung 12 mit integriert werden. Hierzu sind zusätzliche Steuerleitungen nach außen denkbar, um Hardware-Komponenten aus einem Stromsparmodus aufzuwecken. Weiterhin können Puffer eingefügt werden, um Nachrichten verzögert weitergeben zu können.

Die Funktionalität der zuvor beschriebenen Ausführungsbeispiele lässt sich, in Bezug auf das erste bis dritte Ausführungsbeispiel in einem Transceiver bzw. einer Sende-/Empfangseinrichtung 13, oder in einer Kommunikationssteuereinrichtung 11, usw. umsetzen. Zudem ist auch die Integration in bestehende Komponenten des CAN-Sende-/Empfangspfades, insbesondere in den Common Mode Choke (CMC), usw. denkbar. Zusätzlich oder alternativ kann es in existierende Produkte, insbesondere als separater Baustein, integriert werden.

## Patentansprüche

1. CAN-Teilnehmerstation (10; 30) für ein Bussystem, in dem ein CAN-Netzwerk und ein CAN FD-Netzwerk parallel betrieben werden, mit einer Kommunikationssteuereinrichtung (11) zur Steuerung der Kommunikation im Bussystem (1),
einer Sende-/Empfangseinrichtung (13) zum Senden oder Empfangen von Nachrichten von oder für die Teilnehmerstation (10; 30), und
einer ersten Anpasseinrichtung (12) mit
einer Empfangspfad-Auswerteeinheit (121) zur Auswertung von empfangenen Nachrichten (45, 46, 47) in Bezug darauf, ob die empfangene Nachricht (45, 46, 47) eine Nachricht (46) gemäß der CAN-FD-Spezifikation ist oder nicht, und
einer Empfangspfad-Ausgabeeinheit (122) zur Ausgabe eines Dummy-Rahmens an eine Kommunikationssteuereinrichtung (11) einer CAN-Teilnehmerstation (10; 30) für das Bussystem (1), falls eine Auswertung der Empfangspfad-Auswerteeinheit (121) ergibt, dass die empfangene Nachricht (45, 46, 47) eine Nachricht (46) gemäß der CAN-FD-Spezifikation ist, und einer zweiten Anpasseinrichtung (12) mit
einer Sendepfad-Auswerteeinheit (123) zur Auswertung, ob im Sendepfad einer Kommunikationssteuereinrichtung (11) einer CAN-Teilnehmerstation (10; 30) für das Bussystem (1) ein Fehler-Rahmen gesendet wird oder nicht, und
einer Sendepfad-Ausgabeeinheit (124) zur Blockade eines Fehler-Rahmens, falls die Sendepfad-Auswerteeinheit (123) im Sendepfad einen Fehler-Rahmen erkannt hat.

2. CAN-Teilnehmerstation (10; 30) nach Anspruch 1, wobei der Dummy-Rahmen eine korrekte CAN-Struktur im CAN-Format repräsentiert.

3. CAN-Teilnehmerstation (10; 30) nach Anspruch 1 oder 2, wobei die Empfangspfad-Auswerteeinheit (121) zur Auswertung eines EDL-Bits in der Arbitrierungsphase des Bussystems (1) ausgestaltet ist.

4. CAN-Teilnehmerstation (10; 30) nach Anspruch 3, wobei die Empfangspfad-Auswerteeinheit (121) zudem zur Auswertung eines BRS-Bits ausgestaltet ist.

5. CAN-Teilnehmerstation (10; 30) nach einem der vorangehenden Ansprüche, wobei die Empfangspfad-Auswerteeinheit (121) zudem zur Erfassung der Länge einer Nachricht (45, 46, 47) ausgestaltet ist.

6. CAN-Teilnehmerstation (10; 30) nach Anspruch 5, wobei die Empfangspfad-Auswerteeinheit (121), um die Länge eines Rahmens zu erfassen, zur Decodierung eines DLC-Felds ausgestaltet ist oder zur Erfassung einer Busaktivität und eines Terminierungssegmentes ausgestaltet ist.

7. CAN-Teilnehmerstation nach Anspruch 1, wobei die erste Anpasseinrichtung (12) Teil der Kommunikationssteuereinrichtung (11) oder Teil der Sende-/Empfangseinrichtung (13) ist, und/oder wobei die zweite Anpasseinrichtung (12) Teil der Kommunikationssteuereinrichtung (11) oder Teil der Sende-/Empfangseinrichtung (13) ist.

8. Verfahren zum Betreiben einer CAN-Teilnehmerstation (10; 30) in einem Bussystem, in dem ein CAN-Netzwerk und ein CAN FD-Netzwerk parallel betrieben werden, mit den beiden Schritten
Auswerten (S2), mit einer Empfangspfad-Auswerteeinheit (121) der CAN-Teilnehmerstation, von empfangenen Nachrichten (45, 46, 47) in Bezug darauf, ob eine empfangene Nachricht (45, 46, 47) eine Nachricht (46) gemäß der CAN-FD-Spezifikation ist oder nicht, und
Ausgeben (S4), mit einer Empfangspfad-Ausgabeeinheit der CAN-Teilnehmerstation, eines Dummy-Rahmens an eine Kommunikationssteuereinrichtung (11) der CAN-Teilnehmerstation (10; 30), falls die Auswertung der Empfangspfad-Auswerteeinheit (121) ergibt, dass die empfangene Nachricht (45, 46, 47) eine Nachricht (46) gemäß der CAN-FD-Spezifikation ist,
und den beiden Schritten
Auswerten (S12), mit einer Sendepfad-Auswerteeinheit (123) der CAN-Teilnehmerstation, ob im Sendepfad der Kommunikationssteuereinrichtung (11) der CAN-Teilnehmerstation (10; 30) ein Fehler-Rahmen gesendet wird oder nicht, und
Blockieren (S13), mit einer Sendepfad-Ausgabeeinheit (124) der CAN-Teilnehmerstation, des Fehler-Rahmens, falls die Sendepfad-Auswerteeinheit (123) im Sendepfad einen Fehler-Rahmen erkannt hat.

## Claims

1. CAN subscriber station (10; 30) for a bus system in which a CAN network and a CAN FD network are operated in parallel, having
a communication control device (11) for controlling the communication in the bus system (1),
a transmission/reception device (13) for transmitting or receiving messages from or for the subscriber station (10; 30), and
a first adaptation device (12) having
a reception path evaluation unit (121) for evaluating received messages (45, 46, 47) with regard to whether or not the received message (45, 46, 47) is a message (46) according to the CAN FD specification, and
a reception path output unit (122) for outputting a dummy frame to a communication control device (11) of a CAN subscriber station (10; 30) for the bus system (1) if the result of an evaluation of the reception path evaluation unit (121) is that the received message (45, 46, 47) is a message (46) according to the CAN FD specification, and a second adaptation device (12) having
a transmission path evaluation unit (123) for evaluating whether or not an error frame is being transmitted in the transmission path of a communication control device (11) of a CAN subscriber station (10; 30) for the bus system (1), and
a transmission path output unit (124) for blocking an error frame if the transmission path evaluation unit (123) has identified an error frame in the transmission path.

2. CAN subscriber station (10; 30) according to Claim 1, wherein the dummy frame represents a correct CAN structure in the CAN format.

3. CAN subscriber station (10; 30) according to Claim 1 or 2, wherein the reception path evaluation unit (121) is designed to evaluate an EDL bit in the arbitration phase of the bus system (1).

4. CAN subscriber station (10; 30) according to Claim 3, wherein the reception path evaluation unit (121) is additionally designed to evaluate a BRS bit.

5. CAN subscriber station (10; 30) according to one of the preceding claims, wherein the reception path evaluation unit (121) is additionally designed to detect the length of a message (45, 46, 47).

6. CAN subscriber station (10; 30) according to Claim 5, wherein, in order to detect the length of a frame, the reception path evaluation unit (121) is designed to decode a DLC field or is designed to detect a bus activity and a termination segment.

7. CAN subscriber station according to Claim 1, wherein the first adaptation device (12) is part of the communication control device (11) or part of the transmission/reception device (13), and/or wherein the second adaptation device (12) is part of the communication control device (11) or part of the transmission/reception device (13).

8. Method for operating a CAN subscriber station (10; 30) in a bus system in which a CAN network and a CAN FD network are operated in parallel, having the two steps of:
evaluating (S2), with a reception path evaluation unit (121) of the CAN subscriber station, received messages (45, 46, 47) with regard to whether or not a received message (45, 46, 47) is a message (46) according to the CAN FD specification, and
outputting (S4), with a reception path output unit of the CAN subscriber station, a dummy frame to a communication control device (11) of the CAN subscriber station (10; 30) if the result of the evaluation of the reception path evaluation unit (121) is that the received message (45, 46, 47) is a message (46) according to the CAN FD specification,
and the two steps of:
evaluating (S12), with a transmission path evaluation unit (123) of the CAN subscriber station, whether or not an error frame is being transmitted in the transmission path of the communication control device (11) of the CAN subscriber station (10; 30), and
blocking (S13), with a transmission path output unit (124) of the CAN subscriber station, the error frame if the transmission path evaluation unit (123) has identified an error frame in the transmission path.

## Revendications

1. Station d'abonné CAN (10 ; 30) pour un système de bus dans lequel un réseau CAN et un réseau CAN FD peuvent fonctionner en parallèle, comprenant un dispositif de commande de communication (11) destiné à commander la communication dans le système de bus (1), un dispositif émetteur/récepteur (13) destiné à émettre ou à recevoir des messages vers ou de la part de la station d'abonné (10 ; 30) et
un premier dispositif d'adaptation (12) comprenant
une unité d'interprétation de chemin de réception (121) destinée à interpréter les messages (45, 46, 47) reçus en rapport avec le fait que le message (45, 46, 47) reçu est ou non un message (46) selon la spécification CAN-FD, et
une unité de délivrance de chemin de réception (122) destinée à délivrer une trame factice à un dispositif de commande de communication (11) d'une station d'abonné CAN (10 ; 30) pour le système de bus (1) dans le cas où une interprétation de l'unité d'interprétation de chemin de réception (121) a pour résultat que le message (45, 46, 47) reçu est un message (46) selon la spécification CAN-FD, et
un deuxième dispositif d'adaptation (12) comprenant
une unité d'interprétation de chemin d'émission (123) destinée à interpréter si une trame erronée a été émise ou non dans le chemin d'émission d'un dispositif de commande de communication (11) d'une station d'abonné CAN (10 ; 30) pour le système de bus (1), et
une unité de délivrance de chemin d'émission (124) destinée à bloquer une trame erronée dans le cas où l'unité d'interprétation de chemin d'émission (123) a reconnu une trame erronée dans le chemin d'émission.

2. Station d'abonné CAN (10 ; 30) selon la revendication 1, la trame factice représentant une structure CAN correcte dans le format CAN.

3. Station d'abonné CAN (10 ; 30) selon la revendication 1 ou 2, l'unité d'interprétation de chemin de réception (121) étant configurée pour interpréter un bit EDL dans la phase d'arbitrage du système de bus (1).

4. Station d'abonné CAN (10 ; 30) selon la revendication 3, l'unité d'interprétation de chemin de réception (121) étant en outre configurée pour interpréter un bit BRS.

5. Station d'abonné CAN (10 ; 30) selon l'une des revendications précédentes, l'unité d'interprétation de chemin de réception (121) étant en outre configurée pour détecter la longueur d'un message (45, 46, 47).

6. Station d'abonné CAN (10 ; 30) selon la revendication 5, l'unité d'interprétation de chemin de réception' (121), en vue de détecter la longueur d'une trame, étant configurée pour décoder un champ DLC ou pour détecter une activité de bus et un segment de terminaison.

7. Station d'abonné CAN selon la revendication 1, le premier dispositif d'adaptation (12) faisant partie du dispositif de commande de communication (11) ou faisant partie du dispositif émetteur/récepteur (13), et/ou le deuxième dispositif d'adaptation (12) faisant partie du dispositif de commande de communication (11) ou faisant partie du dispositif émetteur/récepteur (13).

8. Procédé pour faire fonctionner une station d'abonné CAN (10 ; 30) dans un système de bus dans lequel un réseau CAN et un réseau CAN FD peuvent fonctionner en parallèle, comprenant les deux étapes suivantes :
interprétation (S2), avec une unité d'interprétation de chemin de réception (121) de la station d'abonné CAN, des messages (45, 46, 47) reçus en rapport avec le fait qu'un message (45, 46, 47) reçu est ou non un message (46) selon la spécification CAN-FD, et
délivrance (S4), avec une unité de délivrance de chemin d'émission de la station d'abonné CAN, d'une trame factice à un dispositif de commande de communication (11) de la station d'abonné CAN (10 ; 30) dans le cas où l'interprétation de l'unité d'interprétation de chemin de réception (121) a pour résultat que le message (45, 46, 47) reçu est un message (46) selon la spécification CAN-FD,
et les deux étapes suivantes :
interprétation (S12), avec une unité d'interprétation de chemin d'émission (123) de la station d'abonné CAN, si une trame erronée a été émise ou non dans le chemin d'émission du dispositif de commande de communication (11) de la station d'abonné CAN (10 ; 30), et
blocage (S13), avec une unité de délivrance de chemin d'émission (124) de la station d'abonnée CAN, de la trame erronée dans le cas où l'unité d'interprétation de chemin d'émission (123) a reconnu une trame erronée dans le chemin d'émission.
